# EUROPEAN PATENT SPECIFICATION

(11) **EP 3 194 775 B1**
(45) Date of publication and mention of the grant of the patent: **23.01.2019**
(21) Application number: 15763346.2
(22) Date of filing: 16.09.2015
(51) Int. Cl.: F04B 27/18, F04B 53/10, F16K 37/00, F16K 11/07, F16K 31/04

(54) **ELECTRICAL CONTROL VALVE FOR AN AIR CONDITIONING COMPRESSOR**
ELEKTRISCHES STEUERVENTIL FÜR EINEN KLIMAANLAGENKOMPRESSOR
SOUPAPE DE COMMANDE ÉLECTRIQUE POUR COMPRESSEUR DE CONDITIONNEMENT D'AIR

(30) Priority: 16.09.2014 DE 102014218525
(43) Date of publication of application: 26.07.2017
(73) Proprietor: TE Connectivity Germany GmbH, 64625 Bensheim (DE)
(72) Inventor: DOMKE, Daniel, 67227 Frankenthal (DE)
(74) Representative: Grünecker Patent- und Rechtsanwälte PartG mbB
(86) International application number: PCT/EP2015/071188
(87) International publication number: WO 2016/042013

(56) References cited:
- EP-A1- 1 333 177
- DE-A1-102006 024 069
- DE-A1-102011 005 868
- US-A1- 2005 062 003

## Description

The invention relates to an electrical control valve for use in an air conditioning compressor, in particular in an air conditioning compressor for a motor vehicle. The electrical control valve controls the refrigerant flow from a high-pressure area into a crankcase pressure area, and from the crankcase pressure area into a low-pressure area of the air conditioning compressor.

Both the design and the mode of operation of air conditioning compressors are known to the person skilled in the art from DE 10 2011 117 354 A1, for example.

A plurality of pistons are arranged in a crank casing of an air conditioning compressor in order to pump refrigerant into a pressure chamber. In the process, the movement of the pistons is guided by a rotating wobble plate, as will become clear from the following description.

If the wobble plate, which is rotated via a belt drive for example, has a tilt angle different from zero, this leads to an axial stroke movement of the pistons as they turn around the wobble plate's axis of rotation. In the process, refrigerant is sucked up by the suction chamber of the air conditioning compressor and pumped into the pressure chamber.

The suction chamber is connected to the low-pressure-side connector of the air conditioning compressor, which for its part, in its mounted state in the motor vehicle, is connected to the low-pressure area of the air conditioning system, i.e. in particular with the condenser's outlet. The pressure chamber is connected to the high-pressure-side outlet of the air conditioning compressor, which for its part is connected to the high-pressure area of the climate system, in particular via a heat exchanger with the inlet of the condenser.

To adapt the displacement volume, in particular to control the flow of refrigerant, varying the tilt angle of the wobble plate in the air conditioning compressor is already known. For example, if the air conditioning compressor is preset for a maximum displacement volume, a pivoting back of the wobble plate brings about a decrease in the axial hub stroke of the pistons of the air conditioning compressor and thus a reduction of the displacement volume.

Furthermore, the performing of such a control of the refrigerant flow by a control valve is known. For this purpose, the control valve is connected to the high-pressure area, the low-pressure area and the crankcase pressure area and controls the flow of refrigerant between the three areas.

For example, if the control valve, in one position, opens a connection between the high-pressure area and crankcase pressure area of the air conditioning compressor, refrigerant flows from the high-pressure area into the crankcase pressure area; there is a pressure rise in the crankcase pressure area.

If the control valve, in another position, opens a connection between the crankcase pressure area and the low-pressure area of the air conditioning compressor, refrigerant flows from the crankcase pressure area into the low-pressure area; there is a pressure fall in the crankcase pressure area.

The pressure rise in the crankcase pressure area controlled by control valve brings about a pivoting back of the wobble plate. Thus the axial stroke movement of the air conditioning compressor's pistons decreases and the displacement volume of the air conditioning compressor is reduced. Consequently, the pressure does not increase further in the high-pressure area of the air conditioning system.

The pressure fall in the crankcase pressure area controlled by control valve brings about a swinging out (i.e. tipping) of the wobble plate. Thus the axial stroke movement of the air conditioning compressor's pistons increases and the displacement volume of the air conditioning compressor is made larger. Consequently, the pressure increases further in the high-pressure area of the air conditioning system.

Usually, the wobble plate is held in the tipped starting position by spring tension, so that if there is a later fall in pressure in the crankcase pressure area the wobble plate pivots into the starting position again and provides a starting position with regard to the displacement volume in the air conditioning compressor.

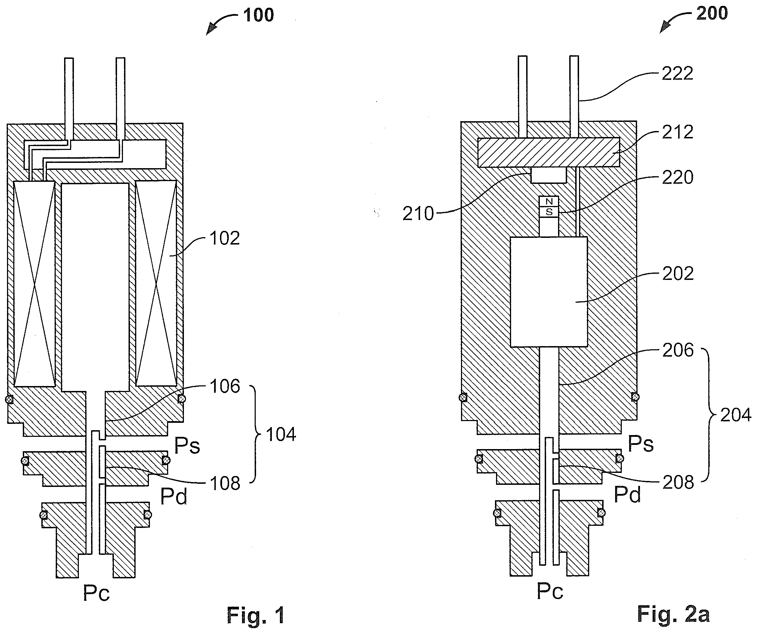

An exemplary realisation of a control valve 100 will be explained hereafter using Fig. 1. In this case, the control valve 100 is shown in a schematic depiction, as used for an air conditioning compressor to control a refrigerant flow from a high-pressure area into a crankcase pressure area, and from the crankcase pressure area into a low-pressure area respectively.

Actuation of the control valve 100 takes place through the movement of a control piston 104 in the control valve. The control piston 104 here comprises an actuation rod 106 with at least one seal body 108. As a consequence, the actuation rod 106 moves in and in opposition to the longitudinal direction of the control piston 104, so that the seal body 108 respectively opens or blocks the passage between the high-pressure area and the crankcase area in the control valve.

The movement of the control piston 104 in the control valve frequently takes place as a guided movement. Piston guiding of the control piston can be realised, by way of example, by a longitudinal bore in the casing of the control valve. Furthermore, lateral recesses Ps, Pd and Pc can be provided in the casing for the connection of the high-pressure area Pd, the low-pressure area Ps and the crankcase pressure area Pc.

In the field of air conditioning compressors, the control piston is frequently also referred to as a needle. Here, a needle is characterised in that the seal body (i.e. shut-off body) is configured to be conical and cooperates with an annular inlet/outlet aperture in the passage between the high-pressure area and the crankcase pressure area and in the passage between the crankcase pressure area and the low-pressure area.

Actuation of the control piston takes place in accordance with the following description: if the control piston 104 is moved into a first position, the control valve 100 (more precisely: the seal body 108) opens the passage from the high-pressure area Pd into the crankcase pressure area Pc. At the same time, the passage between the crankcase pressure area Pc and the low-pressure area Ps is sealed (i.e. blocked).

As a consequence, refrigerant can flow from the high-pressure area Pd into the crankcase pressure area Pc and can provide a rise in pressure there. The first position of the control valve results in the air conditioning compressor being regulated downwards.

If the control piston 104 is moved into a second position, the control valve 100 (more precisely: the seal body 108) opens the passage between the crankcase pressure area Pc and the low-pressure area Ps. At the same time, the passage between the high-pressure area Pd and the crankcase pressure area Pc is sealed (i.e. blocked).

As a consequence, refrigerant will flow from the crankcase pressure area Pc into the low-pressure area Ps and provide a fall in pressure in the crankcase pressure area. The second position of the control valve results in the air conditioning compressor being regulated up.

The movement of the control piston is brought about by an electromagnetic annular coil 102 arranged to the side of the actuation rod 106. If power is fed into the annular coil 102, there is induced in the interior of the coil a magnetic field which interacts with the end of the actuation rod 106 of the control piston 104 arranged inside the annular coil.

Advantageously, the end of the actuation rod 106 of the control piston 104 arranged inside the annular coil 102 is made of ferromagnetic material.

In control valves operated with an electromagnetic annular coil, control of the movement of the control piston between the first and the second position is imprecise. The mechanical and magnetic interactions between the annular coil 102 and the end of the actuation rod 106 of the control piston 104 arranged therein result in a hysteresis in the movement of the control piston 104 with regard to the power fed into the annular coil 102.

Furthermore, the high and low pressures respectively acting on the seal body of the control piston in the high-pressure area and the low-pressure area are variable and counteract the induced magnetic field. Thus, by way of example, in the event of a higher pressure in the high-pressure area, a stronger magnetic field is required, for example to move the control piston from one position into the second.

Furthermore, precise control of the control valve is disadvantageous due to the complicated nature of ascertaining the location of the control piston and is not energy efficient, for example because a constant flow of current in the electromagnetic annular coil is necessary even to keep the control piston in the closed position.

US2005/062003 A1 relates to a pneumatic servo valve, and more particularly, to a pneumatic servo valve, wherein displacement of a spool due to flow force of a fluid is prevented by firmly holding the spool just after position control for the spool is completed, thereby ensuring the stability of a valve system, and an encoder is employed as a spool position detecting means.

DE 10 2011 005868 A1 relates to a valve control device for a vehicle, in particular an agricultural utility vehicle, with a control unit for controlling an electromagnetically operable valve, wherein the control unit queries a the electromagnetically operable valve associated identification feature upon activation of a self-calibration mode, a corresponding to the queried identification feature valve type determined, and a selects the control valve associated with the determined valve type for controlling the electromagnetically operable valve.

DE 10 2006 024069 A1 relates to a pressure control valve for hydraulic systems, in particular automatic vehicle transmissions.

EP 1 333 177 A1 relates to a capacity control valve for variably modulating the capacity or pressure of a process fluid, which modulates the capacity or pressure in a control chamber of an air-conditioning system in a quick manner.

The underlying invention sets itself the object of providing a control valve which enables precise control of the movement of the control piston. Furthermore, the object of the invention is to provide a cost-effective control valve which at the same time functions energy-efficiently, so to speak.

At least one of the abovementioned objects is achieved by the invention described in the main claim. Advantageous developments are set out in the subclaims.

According to the underlying invention, an electrical control valve is proposed which is particularly designed for use in an air conditioning compressor, to control a refrigerant flow from a high-pressure area into a crankcase pressure area, and from the crankcase pressure area into a low-pressure area. The control valve comprises a control piston which in two different positions connects the high-pressure area to the crankcase pressure area and the crankcase pressure area to the low-pressure area. Further, the control valve comprises an electric motor which moves the control piston back and forth between the two positions. The control valve comprises a sensor which ascertains the position of the control piston moved by the electric motor. In addition, the control valve comprises a control unit which, depending on the position of the control piston ascertained by the sensor, controls the refrigerant flow by means of movement of the control piston by the electric motor ,
such that the sensor is designed as a Hall sensor and the movement of the control piston is ascertained as a change in a magnatic field, and by further comprising a permanent magnet arranged at the control piston opposite the Hall sensor.

In connection with the invention, the term "motor" or "electric motor" denotes a device which converts electrical energy into mechanical movement via a rotation. In this context, the term motor or electric motor implies the presence of a stator and a rotor which move the control piston by means of rotation. As a consequence, all such devices which do not move the control piston by means of rotation (for example by means of translation) are not included by the term motor or electric motor.

Advantageously, the movement of the control piston by means of rotation in a motor enables precise positioning of the control piston in the two different (i.e. the opened and closed) positions of the control valve. When the control piston moves by means of rotation in the electric motor, it is possible to position the rotor provided in the motor at a precise angle to the stator so that no additional compensating of counterpressure acting on the seal body is required.

In other words, the electrical control valve's advantage of increased precision in the back and forth movement between the two positions is realised through the mechanical conversion of the rotational movement in the motor into the translational movement of the control piston. At the same time, the use of a motor, in comparison to the electrical annular coil, enables a stronger feed force in the movement of the control piston between the two different positions of the control valve, as a result of which, for example, the refrigerant flow from a high-pressure area into a crankcase pressure area can be better blocked.

At the same time, the following advantages are realised, almost no hysteresis, increased energy efficiency as no holding current is required (cf. electromagnetic annular coil, for instance); improved position ascertaining by means of additional sensor, for example for more precise ascertaining of the location of the control piston after an electrical reboot (e.g. hard reset); reduced cost of producing the control valve; reduction in the overall size of the control valve and saving in its weight by saving on the electromagnetic annular coil.

To better understand the present invention, this is explained in greater detail using the exemplary embodiments depicted in the following figures. In these, identical parts are provided with identical reference numbers and identical component names. Furthermore, individual features or combinations of features from the shown and described designs may depict individual, independent inventive solutions or solutions according to the invention.

The following are shown:
- **Fig. 1**: a schematic depiction of a control valve for an air conditioning compressor for controlling a refrigerant flow from a high-pressure area into a crankcase pressure area;
- **Fig. 2a**: a schematic depiction of a control valve according to the invention for an air conditioning compressor in a first position corresponding to the downward regulation of the air conditioning compressor;
- **Fig. 2b**: a schematic depiction of a control valve according to the invention for an air conditioning compressor in an intermediate position corresponding to the partial upward regulation of the air conditioning compressor; and
- **Fig. 2c**: a schematic depiction of a control valve according to the invention for an air conditioning compressor for controlling a refrigerant flow in a second position corresponding to the upward regulation of the air conditioning compressor.

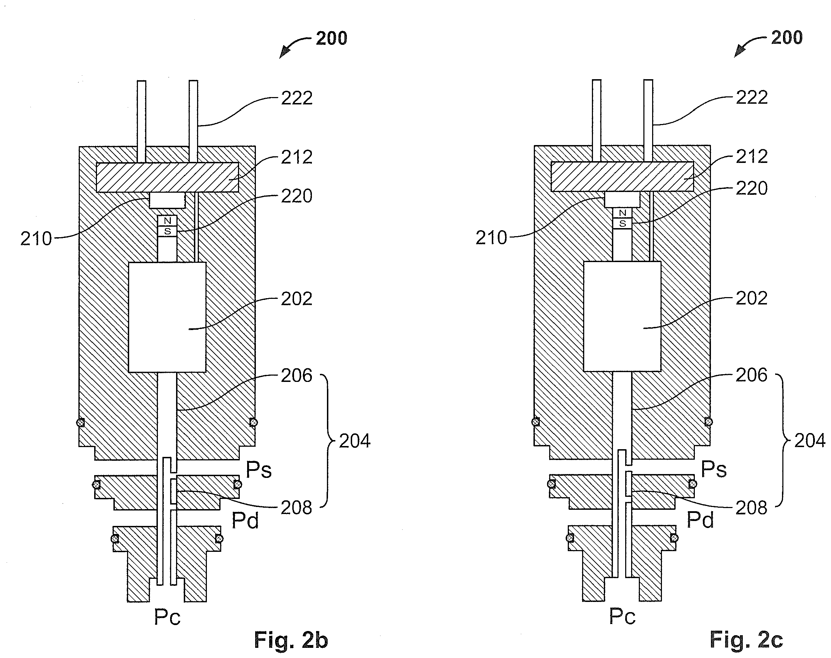

With reference to Figures 2a, 2b and 2c, there will firstly be explained hereafter in greater detail the general inventive principle of the control valve for an air conditioning compressor for controlling a refrigerant flow from a high-pressure area into a crankcase pressure area or from the crankcase pressure area into a low-pressure area.

In Figures 2a, 2b and 2c, a control valve according to the invention for an air conditioning compressor of a first exemplary embodiment is depicted, with further exemplary embodiments being explained in greater detail in the description. All exemplary embodiments of the control valve permit precise positioning of the control piston in the two different positions of the control valve.

The control valve 200 controls the refrigerant flow from a high-pressure area into a crankcase pressure area, and from the crankcase pressure area into a low-pressure area of an air conditioning compressor (not shown) respectively. For this purpose, the control valve comprises a connection Pd for connecting to the high-pressure area of an air conditioning compressor and a connection Pc for connecting to the crankcase pressure area of the air conditioning compressor and the connection Ps for connecting to the low-pressure area of the air conditioning compressor.

The control valve 200 furthermore comprises a control piston 204, which can assume two different positions in the control valve 200. Here, the control piston 204 comprises an actuation rod 206 with at least one seal body 208.

In the first of the two different positions, the control piston 204 connects the high-pressure area to the crankcase pressure area. In the second of the two different positions, the control piston 204 connects the crankcase pressure area to the low-pressure area.

In the context of the invention, actuation of the control valve 200 takes place through the positioning of the control piston 204 in the two positions, in which a passage from the high-pressure area into the crankcase pressure area and from the crankcase pressure area into the low-pressure area respectively is appropriately opened or blocked by the control piston 204.

An electric motor 202, which the control valve 200 additionally comprises, moves the control piston 204 back and forth between the two positions. The use of an electric motor 202 implies the movement of the control piston 204 between the two positions by means of rotation. Precisely this rotational movement of the electric motor 202 is advantageous in the context of the invention, because positioning of the control piston 204 can be carried out at a precise angle.

Furthermore, the control valve 200 comprises a sensor 210, which ascertains the position of the control piston 204 moved by the electric motor 202, and a control unit 212, which, depending on the position of the control piston 204 ascertained by the sensor 210, controls the refrigerant flow by means of movement of the control piston 204 by the electric motor 202.

In the interplay of electric motor 202, sensor 210 and control unit 212, further advantages according to the invention are realised in the improvement of the precision in the positioning of the control piston 204 in the two different positions of the control piston 200. Advantageously, deviations between the target value and the actual value can be ascertained in the control unit 212 by the sensor 210.

In other words, an adaptation of the control unit 212 for triggering the motor 202 using a target value (reference variable) and an actual value (control variable), which corresponds to the position of the control piston ascertained by the sensor 210, allows the influence of disturbances (disturbance variables) when the control piston 204 moves to be minimised.

Furthermore, advantageously, different characteristics of the control valve or of the air conditioning compressor can be provided reversibly in the control unit 212, and these transmit an appropriate precise control, via the position of the control piston, to the refrigerant flow from the high-pressure area into the crankcase pressure area.

According to an advantageous development of the control valve according to the invention, the control piston is movable between the two positions, such that the cross-section of the connection between the high-pressure area and the crankcase pressure area and between the crankcase pressure area and the low-pressure area of the control valve is continuously variable.

As a consequence, through the back and forth movement of the control piston, this latter is positioned not only in the first position, in which the control valve connects the high-pressure area and the crankcase pressure area to one another, and in the second position, in which the control valve connects the crankcase pressure area and the low-pressure area to one another, but rather is also brought into intermediate positions situated between the first and second position. Thus the first and the second positions of the control piston correspond to positions of maximum displacement with regard to the movement of the control piston.

Furthermore, an advantageous development of the control valve according to the invention envisages that a casing of the control valve guides the movement of the control piston between the two different positions. In other words, the casing of the control valve is designed in the advantageous development as a guide, so that the movement of the control piston is restricted between the two different positions.

According to a further advantageous development of the control valve according to the invention, the movement of the control piston takes place in the form of a helical movement or in the form of a straight movement between the two positions. Particularly in the case of a helical movement, particularly precise positioning of the control piston by the electric motor is enabled, because the forward and backward movement of the control piston is set depending on an angle of rotation and a helical characteristic curve.

In a further advantageous development, the control valve according to the invention additionally comprises a gearing mechanism, with the aid of which the electric motor moves the position of the control piston back and forth. In this case, the gearing mechanism makes possible, for example, the mechanical conversion of the rotational movement of the motor into a translational movement to move the control piston between the two different positions.

A gearing mechanism is also advantageous in respect of the adaptability of the force or of the torque of the rotational movement of the electric motor before the control piston is moved by it. Exemplary implementations of the last-specified advantageous development comprise a worm gearing mechanism or bevel gearing mechanism.

It should be particularly emphasised that, when the motor is at high torque, in the two different positions, in which the high-pressure area and the crankcase pressure area and the crankcase pressure area and the low-pressure area respectively are connected to one another, the control piston is moved such that the respective other connection, namely between the crankcase pressure area and the low-pressure area or between the high-pressure area and the crankcase pressure area respectively, is particularly well sealed. Thus the efficiency is increased when the control valve is used.

A further advantageous development of the control valve according to the invention envisages that the electric motor is designed as a servomotor and integrates the sensor. In this case, this realisation is advantageous because it renders an additional sensor in the control valve, for ascertaining the position of the control piston, superfluous. Due to the construction, a sensor integrated into a servomotor does detect the rotational position of the motor shaft, but this is directly dependent upon the position of the control piston.

In particular in the case of the combination of the example developments mentioned latterly above with the servomotor and gearing mechanism, the sensor is adapted such that the position of the control piston is ascertained depending on a rotational position of the motor shaft of the servomotor and on a known transmission ratio of the gearing mechanism. In this case, the direct dependence of the position of the control piston on the rotational movement of the motor and on the transmission ratio of the gearing mechanism is utilised, and it is possible to dispense with an additional sensor in the control valve for ascertaining the position of the control piston.

The sensor of the control valve according to the invention is designed as a Hall sensor. It is possible to ascertain the position of the control piston from its movement as a change in a magnetic field. Different constructions of the control valve permit such an ascertainment of position as a change in magnetic field.

On the one hand, by way of example, at least the end of the control piston facing the sensor could be magnetised or comprise a magnet (preferably a permanent magnet), so that the movement of the control piston directly brings about a change in the magnetic field and thus becomes able to be ascertained by the sensor designed as a Hall sensor. A permanent magnet is provided at the control piston such that it is arranged opposite the Hall sensor.

On the other hand, by way of example, at least the end of the control piston facing the sensor could be formed from metal or a metal alloy, so that the movement of the control piston changes an external magnetic field indirectly, by shielding or focusing, and thus controls it such that a change becomes able to be ascertained by the sensor designed as a Hall sensor.

Such a development is advantageous particularly in the case of miniaturisation of the control sensor according to the invention, since with this arrangement it is no longer necessary for the magnetised end of the control piston or the magnet attached thereto to be arranged flush with the sensor. On the contrary, an external magnetic field can also be generated by a laterally arranged permanent magnet so that the construction height of the control valve in the longitudinal axis can be reduced.

According to a further advantageous development of the control valve according to the invention, the Hall sensor is designed such that, at least in one of the two different positions of the control piston, it borders (e.g. surrounds) the permanent magnet arranged thereon and thus shields the emitted magnetic field from external disturbances. Alternatively, the same effect is naturally also generated by, in one position of the control piston, the Hall sensor being arranged by the permanent magnet arranged at the control piston.

This development is advantageous because through the bordering of the permanent magnet by the Hall sensor (or vice versa) in one of the control piston's positions, this position is ascertained independently of disturbances by an external magnetic field.

In particular, such a development also allows the calibration of the sensor in this control piston position which is independent of disturbances, which is advantageous for example in compensating for temperature fluctuations and the associated change in the emitted magnetic field of a permanent magnet. As a consequence, the precision when ascertaining the position of the control piston in the control valve according to the invention can also be improved in this manner.

Furthermore, an advantageous development of the control valve according to the invention envisages that the Hall sensor is designed such that it ascertains at least one of the two different positions of the control piston without this being moved. For this purpose, the Hall sensor, for example, can be designed such that the measured magnetic field strength is compared with a pre-saved (optionally capable of being recalibrated) reference value for a magnetic field strength allocated to the at least one of the two different positions of the control piston.

Another advantageous development of the control valve according to the invention envisages that the Hall sensor manages without a pre-saved reference value for a (i.e. absolute) magnetic field strength. In this case, the Hall sensor is adapted such that the measured change in the magnetic field strength is compared to the triggering signal of the electric motor for moving the control piston.

For example, if the electric motor is triggered with a uniform signal, it moves the control piston linearly between the two positions. As the control piston moves away from the Hall sensor, the measured change in the magnetic field strength reduces the further away from the Hall sensor the control piston gets. Consequently, the distance and thus the position of the control piston can also be ascertained in this way by the Hall sensor, using the change in the magnetic field strength.

In accordance with a further advantageous development of the control valve according to the invention, the control is designed such that, depending on the position of the control piston ascertained by the sensor and on a pulse-width modulated (i.e. PWM) input signal, the refrigerant flow is controlled by means of movement of the control piston by the electric motor. For example, the PWM input signal has a frequency of 400 Hz, or in other words a pulse-width duration of 1/400 of a second.

As a result, this particularly guarantees backwards compatibility with existing air conditioning compressors for the triggering of which a PWM input signal is provided.

In addition, in an advantageous development of the control valve according to the invention, the control is designed such that, at least in part, the power provided by the pulse-width modulated input signal is used for moving the control piston by the motor and for ascertaining the position of the control piston by the sensor. As a result, an additional power supply to the control valve is unnecessary.

With reference to Figures 2a, 2b and 2c, three example positions of the control piston in the control valve according to the invention will be explained in greater detail hereafter according to an exemplary embodiment.

According to the first exemplary embodiment, the control valve 200 according to the invention is shown in Figures 2a, 2b and 2c. Here, the control valve 200 comprises the already described control piston 204, the electric motor 202, the sensor 210 and the control unit 212.

In order to avoid repetitions, in this context reference is made only to statements above which explain how the control valve makes possible the flow of refrigerant from a high-pressure area Pd into a crankcase pressure area Pc and from the crankcase pressure area Pc into the low-pressure area Ps respectively, particularly in an air conditioning compressor.

According to the first exemplary embodiment, the control piston 204 of the control valve 200 comprises an actuation rod 206 and, at its one end, a seal body 208, the actuation rod 206 and the seal body 208 being constructed (i.e. formed) from one piece as in the depicted first exemplary embodiment.

The actuation of the control piston 204 is carried out here by the electric motor 202 which sets the actuation rod 206 into motion. Due to a mechanical coupling between the actuation rod 206 and seal body 208, the movement is transmitted to the seal body 208. In the exemplary embodiment, the actuation of the actuation rod 206 takes place as a linear movement in the longitudinal direction of the control valve 200 and, through the one-piece construction, is equally transmitted to the seal body 208.

If the control piston 204 of the control valve 200 is moved into a first position, the seal body 208 opens the passage between the high-pressure area Pd and the crankcase pressure area Pc (see for example Fig. 2a). As a consequence, refrigerant can flow from the high-pressure area Pd into the crankcase pressure area Pc of an air conditioning compressor and provides a rise in pressure there (i.e. in the crankcase of the air conditioning compressor). The first position of the control valve results in the air conditioning compressor being regulated downwards.

At the same time, in the first position of the control piston, the passage between the crankcase pressure area Pc and the low-pressure area Ps is sealed (i.e. blocked). As a consequence, no refrigerant can flow from the crankcase pressure area into the low-pressure area and provide a fall in pressure in the crankcase.

If the control piston 204 of the control valve 200 is moved into a second position, the seal body 208 opens the passage between the crankcase pressure area Pc and the low-pressure area Ps (see Figs. 2b and 2c, for example). As a consequence, refrigerant can flow from the crankcase pressure area Pc into the low-pressure area Ps of an air conditioning compressor and provide a fall in pressure in the crankcase. The second position of the control valve results in the air conditioning compressor being regulated upwards.

At the same time, in the second position of the control piston, the passage between the high-pressure area Pd and the crankcase pressure area Pc is sealed (i.e. blocked). As a consequence, no refrigerant can flow from the high-pressure area into the crankcase pressure area and provide a rise in pressure there (i.e. crankcase of the air conditioning compressor).

According to the exemplary embodiment, the control piston 204 is movable between the two positions (i.e. between the first and the second position) such that the cross-section of the connection between the high-pressure area Pd and the crankcase pressure area Pc and between the crankcase pressure area Pc and the low-pressure area Ps of the control valve respectively is continuously variable.

As a consequence, through the back-and-forth movement of the control piston, this latter is positioned not only in the first position, in which the control valve connects the high-pressure area and the crankcase pressure area to one another, and in the second position, in which the control valve connects the crankcase pressure area and the low-pressure area to one another, but rather is also brought into intermediate positions situated between the first and second position. Thus the first and the second positions of the control piston correspond to positions of maximum displacement with regard to the movement of the control piston.

For example, Fig. 2b shows an intermediate position of the control piston 204, which corresponds to the partial upward regulation of the air conditioning compressor. In this intermediate position, the cross-section of the channel controlled by the position of the control piston 204 in the control valve 200 is reduced between the crankcase pressure area Pc and the low-pressure area Ps.

In an advantageous development, the reduction in the cross-section of the channel is generated by the control piston 204, in an intermediate position, only unblocking the channel between the high-pressure area Pd and the crankcase pressure area Pc or between the crankcase pressure area Pc and the low-pressure area Ps of the control valve 200. respectively.

For example, in an intermediate position, the control piston 204 can, for this purpose, be positioned such that an opening in the control piston 204, which unblocks the channel between the crankcase pressure area Pc and the low-pressure area Ps, is provided offset from one of the recesses Pc und Ps in the casing of the control valve 200 for the connection of the crankcase pressure area Pc and the low-pressure area Ps. A corresponding intermediate position of the control piston 204 in the control valve 200 is depicted in Fig. 2b.

For example, in another intermediate position, the control piston 204 can also be positioned, so to speak, such that an opening in the control piston 204, which unblocks the channel between the high-pressure area Pd and the crankcase pressure area Pc, be provided offset from one of the recesses Pd and Pc in the casing of the control valve 200 for the linking of the high-pressure area Pd and the crankcase pressure area Pc.

However, it should be emphasised that the control piston 204 of the control valve 200 is designed such that a connection between all three areas, namely the high-pressure area Pd, crankcase pressure area Pc and the low-pressure area Ps is not possible in any intermediate position. Thus the possibility of a short circuit between the high-pressure area Pd and the low-pressure area Ps is ruled out.

As is usual in the field of air conditioning compressors, the control piston 204 can also be referred to as a needle. Here, the needle is characterised in that the seal body 208 (i.e. shut-off body) is designed to be conical and cooperates with an annular recess Pd and/or Ps in the casing of the control valve 200 between the high-pressure area Pd and the crankcase pressure area Pc, and between the crankcase pressure area Pc and the low-pressure area Ps.

In the exemplary embodiment of the control valve 200 in Figures 2a, 2b and 2c, the control piston 204 is designed as a hollow needle, with a recess oriented longitudinally relative to the control valve (e.g. a longitudinal borehole) in the needle forming the passage between the high-pressure area Pd and the crankcase pressure area Pc when the control valve 200 is opened.

Furthermore, in this exemplary embodiment of the control valve 200, a permanent magnet 220 which faces the sensor 210 is arranged at the end of the actuation rod 206 which is opposite the seal body 208. The sensor 210 is furthermore designed as a Hall sensor.

Furthermore, the control valve 200 in the depicted exemplary embodiment comprises an electrical connection 222 which is connected to the control unit 212 and via which the pulse-width modulated input signal, for example, is input. The sensor 210 and the electric motor 202 are each electrically connected to the control unit 212.

**List of reference symbols:**

| Reference numeral | Description |
|---|---|
| 100,200, | Control valve |
| 102 | Electromagnetic annular coil |
| 202 | Electric motor |
| 104, 204, | Control valve |
| 106, 206 | Actuation rod |
| 108,208 | Seal body |
| 210 | Sensor |
| 212 | Control unit |
| 220 | Permanent magnet |
| 222 | Connection |

## Claims

1. An electrical control valve, in particular for an air conditioning compressor, which controls a refrigerant flow from a high-pressure area into a crankcase pressure area, and from the crankcase pressure area into a low-pressure area, comprising:
a control piston (204) which in two different positions connects the high-pressure area to the crankcase pressure area and the crankcase pressure area to the low- pressure area;
an electric motor (202) which moves the control piston back and forth between the two positions;
a sensor (210) which ascertains the position of the control piston moved by the electric motor; and
a control unit (212) which, depending on the position of the control piston ascertained by the sensor, controls the refrigerant flow by means of movement of the control piston by the electric motor;
**characterized in that**:
the sensor is designed as a Hall sensor and the movement of the control piston is ascertained as a change in a magnetic field,
and by further comprising:
a permanent magnet (220) arranged at the control piston opposite the Hall sensor.

2. The control valve according to claim 1, wherein the control piston is designed such that the cross-section of the connection between the high-pressure area and the crankcase pressure area and between the crankcase pressure area and the low-pressure area of the control valve is continuously variable between its first and its second position.

3. The control valve according to claim 1 or 2, further comprising: a casing which guides the movement of the control piston between the two different positions.

4. The control valve according to claim 3, further comprising: one or more seal device(s) which is (are) arranged between the control piston and the casing.

5. The control valve according to any one of claims 1 to 4, wherein the motor moves the control piston back and forth between the two positions in the form of a helical movement or a straight movement between the two positions.

6. The control valve according to any one of claims 1 to 5, further comprising: a gearing mechanism by means of which the electric motor moves the position of the control piston.

7. The control valve according to claim 6, wherein the gearing mechanism is designed as a worm gearing mechanism or bevel gearing mechanism.

8. The control valve according to any one of claims 1 to 7, wherein the electric motor is designed as a servomotor and comprises the sensor.

9. The control valve according to any one of claims 1 to 8, wherein the Hall sensor is designed such that, at least in one of the two different positions of the control piston, it borders the permanent magnet arranged thereon.

10. The control valve according to any one of claims 1 to 9, wherein the Hall sensor is designed such that it ascertains at least one of the two different positions of the control valve without this being moved.

11. The control valve according to any one of claims 1 to 10, wherein the control unit is designed such that the refrigerant flow is controlled by means of movement of the control piston by the electric motor depending on the position of the control piston ascertained by the sensor and on a pulse-width modulated input signal.

12. The control valve according to any one of claims 1 to 11, wherein the control unit is designed such that, at least in part, the power provided by the pulse-width modulated input signal is used for moving the control piston by the motor and for ascertaining the position of the control piston by the sensor.

13. An air conditioning compressor with a high-pressure area, a low-pressure area and a crankcase pressure area, further comprising: a control valve according to one of claims 1 to 12.

## Patentansprüche

1. Elektrisches Steuerventil, insbesondere für einen Klimakompressor, das einen Kältemittel-Strom aus einem Hochdruck-Bereich in einen Kurbelgehäusedruck-Bereich hinein und aus dem Kurbelgehäusedruck-Bereich in einen Niederdruck-Bereich hinein steuert, wobei es umfasst:
einen Steuerkolben (204), der in zwei verschiedenen Positionen den Hochdruck-Bereich mit dem Kurbelgehäusedruck-Bereich und den Kurbelgehäusedruck-Bereich mit dem Niederdruck-Bereich verbindet;
einen Elektromotor (202), der den Steuerkolben zwischen den zwei Positionen hin- und herbewegt;
einen Sensor (210), der die Position des durch den Elektromotor bewegten Steuerkolbens bestimmt; sowie
eine Steuer-Einheit (212), die in Abhängigkeit von der durch den Sensor bestimmten Position des Steuerkolbens den Kältemittel-Strom mittels Bewegung des Steuerkolbens durch den Elektromotor steuert;
**dadurch gekennzeichnet, dass**:
der Sensor als ein Hall-Sensor ausgeführt ist und die Bewegung des Steuerkolbens als eine Änderung eines Magnetfeldes bestimmt wird,
und dadurch, dass es des Weiteren umfasst:
einen Permanentmagneten (220), der an dem Steuerkolben dem Hall-Sensor gegenüberliegend angeordnet ist.

2. Steuerventil nach Anspruch 1, wobei der Steuerkolben so eingerichtet ist, dass der Querschnitt der Verbindung zwischen dem Hochdruck-Bereich und dem Kurbelgehäusedruck-Bereich sowie zwischen dem Kurbelgehäusedruck-Bereich und dem Niederdruck-Bereich des Steuerventils zwischen seiner ersten und seiner zweiten Position stufenlos geändert werden kann.

3. Steuerventil nach Anspruch 1 oder 2, das des Weiteren ein Gehäuse umfasst, das die Bewegung des Steuerkolbens zwischen den zwei verschiedenen Positionen führt.

4. Steuerventil nach Anspruch 3, das des Weiteren eine oder mehrere Dichtungsvorrichtung/en umfasst, die zwischen den Steuerkolben und dem Gehäuse angeordnet ist/sind.

5. Steuerventil nach einem der Ansprüche 1 bis 4, wobei der Motor den Steuerkolben zwischen den zwei Positionen in Form einer schraubenförmigen oder geradlinigen Bewegung zwischen den zwei Positionen hin- und herbewegt.

6. Steuerventil nach einem der Ansprüche 1 bis 5, das des Weiteren einen Zahnradmechanismus umfasst, mit dem der Elektromotor die Position des Steuerkolbens verschiebt.

7. Steuerventil nach Anspruch 6, wobei der Zahnradmechanismus als ein Schnecken-Zahnradmechanismus oder ein Kegel-Zahnradmechanismus ausgeführt ist.

8. Steuerventil nach einem der Ansprüche 1 bis 7, wobei der Elektromotor als ein Servomotor ausgeführt ist und den Sensor umfasst.

9. Steuerventil nach einem der Ansprüche 1 bis 8, wobei der Hall-Sensor so ausgeführt ist, dass er an wenigstens einer der zwei verschiedenen Positionen des Steuerkolbens an den daran angeordneten Permanentmagneten angrenzt.

10. Steuerventil nach einem der Ansprüche 1 bis 9, wobei der Hall-Sensor so ausgeführt ist, dass er wenigstens eine der zwei verschiedenen Positionen des Steuerventils bestimmt, ohne dass dieses bewegt wird.

11. Steuerventil nach einem der Ansprüche 1 bis 10, wobei die Steuer-Einheit so ausgeführt ist, dass der Kältemittel-Strom mittels Bewegung des Steuerkolbens durch den Elektromotor in Abhängigkeit von der durch den Sensor bestimmten Position des Steuerkolbens sowie eines Pulsbreitenmodulations-Eingangssignals gesteuert wird.

12. Steuerventil nach einem der Ansprüche 1 bis 11, wobei die Steuer-Einheit so ausgeführt ist, dass die durch das Pulsbreitenmodulations-Eingangssignal bereitgestellte Energie wenigstens teilweise zum Bewegen des Steuerkolbens durch den Motor sowie zum Bestimmen der Position des Steuerkolbens durch den Sensor genutzt wird.

13. Klima-Kompressor mit einem Hochdruck-Bereich, einem Niederdruck-Bereich und einem Kurbelgehäusedruck-Bereich, der des Weiteren ein Steuerventil nach einem der Ansprüche 1 bis 12 umfasst.

## Revendications

1. Soupape de commande électrique, en particulier pour un compresseur de climatisation, qui commande un flux de réfrigérant d'une zone à haute pression dans une zone de pression de carter, et de la zone de pression de carter dans une zone à basse pression, comprenant :
un piston de commande (204) qui, dans deux positions différentes, connecte la zone à haute pression à la zone de pression de carter et la zone de pression de carter à la zone à basse pression ;
un moteur électrique (202) qui déplace le piston de commande en va et vient entre les deux positions ;
un capteur (210) qui détermine la position du piston de commande déplacé par le moteur électrique ; et
une unité de commande (212) qui, en fonction de la position du piston de commande déterminée par le capteur, commande le flux de réfrigérant par l'intermédiaire d'un déplacement du piston de commande par le moteur électrique ;
**caractérisée en ce que** :
le capteur est conçu sous forme d'un capteur à effet Hall et le déplacement du piston de commande est déterminé comme un changement d'un champ magnétique,
et comprenant en outre :
un aimant permanent (220) disposé au niveau du piston de commande en vis-à-vis du capteur à effet Hall.

2. Soupape de commande selon la revendication 1, dans laquelle le piston de commande est conçu de telle sorte que la coupe transversale de la connexion entre la zone à haute pression et la zone de pression de carter et entre la zone de pression de carter et la zone à basse pression de la soupape de commande est continuellement variable entre sa première et sa seconde position.

3. Soupape de commande selon la revendication 1 ou 2, comprenant en outre : un boîtier qui guide le déplacement du piston de commande entre les deux positions différentes.

4. Soupape de commande selon la revendication 3, comprenant en outre : un ou plusieurs dispositifs d'étanchéité qui sont agencés entre le piston de commande et le boîtier.

5. Soupape de commande selon l'une quelconque des revendications 1 à 4, dans laquelle le moteur déplace le piston de commande en va-et-vient entre les deux positions sous la forme d'un déplacement hélicoïdal ou d'un déplacement rectiligne entre les deux positions.

6. Soupape de commande selon l'une quelconque des revendications 1 à 5, comprenant en outre : un mécanisme d'engrenage au moyen duquel le moteur électrique déplace la position du piston de commande.

7. Soupape de commande selon la revendication 6, dans laquelle le mécanisme d'engrenage est conçu comme un mécanisme d'engrenage à vis sans fin ou un mécanisme d'engrenage conique.

8. Soupape de commande selon l'une quelconque des revendications 1 à 7, dans laquelle le moteur électrique est conçu comme un servomoteur et comprend le capteur.

9. Soupape de commande selon l'une quelconque des revendications 1 à 8, dans laquelle le capteur à effet Hall est conçu de telle sorte, qu'au moins dans l'une des deux positions différentes du piston de commande, il borde l'aimant permanent agencé sur celui-ci.

10. Soupape de commande selon l'une quelconque des revendications 1 à 9, dans laquelle le capteur à effet Hall est conçu de telle sorte qu'il détermine au moins l'une des deux positions différentes de la soupape de commande sans que celle-ci ne soit déplacée.

11. Soupape de commande selon l'une quelconque des revendications 1 à 10, dans laquelle l'unité de commande est conçue de sorte que le flux de réfrigérant est commandé au moyen d'un déplacement du piston de commande par le moteur électrique en fonction de la position du piston de commande déterminée par le capteur et d'un signal d'entrée modulé en largeur d'impulsion.

12. Soupape de commande selon l'une quelconque des revendications 1 à 11, dans laquelle l'unité de commande est conçue de sorte, qu'au moins en partie, la puissance fournie par le signal d'entrée modulé en largeur d'impulsion est utilisée pour déplacer le piston de commande par le moteur et pour déterminer la position du piston de commande par le capteur.

13. Compresseur de climatisation ayant une zone à haute pression, une zone à basse pression et une zone de pression de carter, comprenant en outre : une soupape de commande selon l'une des revendications 1 à 12.
